(19) Europäisches Patentamt
European Patent Office
Office européen des brevets

(11) **EP 4 641 672 A1**

(12) **EUROPEAN PATENT APPLICATION**

(43) Date of publication:
**29.10.2025 Bulletin 2025/44**

(21) Application number: **25167768.8**

(22) Date of filing: **01.04.2025**

(51) International Patent Classification (IPC):
*H01M 4/36* (2006.01)     *H01M 4/131* (2010.01)
*H01M 4/505* (2010.01)    *H01M 4/525* (2010.01)
*H01M 4/58* (2010.01)     *H01M 10/0525* (2010.01)
*H01M 4/02* (2006.01)

(52) Cooperative Patent Classification (CPC):
**H01M 4/131; H01M 4/364; H01M 4/505;**
**H01M 4/525; H01M 4/5825;** H01M 10/0525;
H01M 2004/021; H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **23.04.2024 KR 20240054161**

(71) Applicant: **Samsung SDI Co., Ltd.**
**Yongin-si, Gyeonggi-do 17084 (KR)**

(72) Inventors:
• **KANG, Gwiwoon**
 **Yongin-si, 17084 (KR)**
• **KIM, Young-Ki**
 **Yongin-si, 17084 (KR)**
• **CHOI, Aram**
 **Yongin-si, 17084 (KR)**
• **KIM, Sangmi**
 **Yongin-si, 17084 (KR)**
• **DOO, Sungwook**
 **Yongin-si, 17084 (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57) Positive electrode active materials for a rechargeable battery, positive electrodes including the positive electrode active material, and rechargeable lithium batteries including the positive electrode are provided. A positive electrode active material includes first particles including a compound represented by Chemical Formula 1 and having a first average particle diameter, and second particles including a compound represented by Chemical Formula 2 and having a second average particle diameter that is greater than the first average particle diameter. A mixing ratio of the first particles and the second particles is about 95:5 to about 99.5:0.5.

FIG. 6A

EP 4 641 672 A1

**Description**

**BACKGROUND**

The present disclosure herein relates to a positive electrode active material for a rechargeable lithium battery, a positive electrode including the positive electrode active material, and a rechargeable lithium battery including the positive electrode, for example, to a positive electrode active material including an olivine-based lithium compound, a positive electrode including the positive electrode active material, and a rechargeable lithium battery including the positive electrode.

Recently, the proliferation of electronic devices that use batteries (such as mobile phones, and/or laptop computers), and/or electric vehicles has led to a significant increase in the demand for batteries, such as rechargeable batteries with relatively high energy density and high capacity. Accordingly, there is significant (active) research and development aimed at enhancing (improving) the performance of rechargeable batteries, such as rechargeable lithium batteries.

A rechargeable lithium battery is a battery including a positive electrode and a negative electrode, both including active materials capable of intercalation and deintercalation of lithium ions, as well as an electrolyte. Electrical energy is generated (produced) through the oxidation and reduction reactions when lithium ions are intercalated into and deintercalated from the positive and negative electrodes.

**SUMMARY**

Aspects of embodiments of the present disclosure are directed toward a positive electrode active material with (having) high energy density, high operating voltage, and/or high conductivity.

Aspects of embodiments of the present disclosure are directed toward a rechargeable lithium battery with (having) high energy density, high operating voltage, high charge and discharge efficiency, and/or enhanced (desired) low-temperature characteristics.

Additional aspects will be set forth in part in the description which follows and, in part, will be apparent from the description, or may be learned by practice of the presented embodiments of the disclosure.

According to one or more embodiments of the present disclosure, a positive electrode active material includes first particles including a compound represented by Chemical Formula 1 and having a first average particle diameter, and second particles including a compound represented by Chemical Formula 2 and having a second average particle diameter that is greater than the first average particle diameter. A mixing ratio of the first particles and the second particles may be about 95:5 to about 99.5:0.5.

$$\text{Chemical Formula 1} \qquad Li_{a1}Mn_{b1}Fe_{x1}B_{y1}PO_{4-c1}$$

In Chemical Formula 1, $0.8 \leq a1 \leq 1.2$, $0.5 \leq b1 \leq 0.899$, $0.1 \leq x1 \leq 0.499$, $0.001 \leq y1 \leq 0.05$, $0 < c1 \leq 0.05$, $b1 + x1 + y1 = 1$, and B is at least one element selected from the group consisting of Mg, Ti, V and Al.

$$\text{Chemical Formula 2} \qquad Li_{a2}Fe_{b2}O_{c2}$$

In Chemical Formula 2, $1 \leq a2 \leq 5$, $0.9 \leq b2 \leq 1.1$, and $2 \leq c2 \leq 4$.

The first average particle diameter may be about 0.4 $\mu$m to about 10 $\mu$m.

According to one or more embodiments of the present disclosure, a positive electrode for a rechargeable lithium battery includes a positive electrode current collector, and a positive electrode active material layer on the positive electrode current collector. The positive electrode active material layer includes the positive electrode active material, a conductive material, and a binder.

According to one or more embodiments of the present disclosure, a rechargeable lithium battery includes the positive electrode, a negative electrode including a negative electrode current collector and a negative electrode active material layer on the negative electrode current collector, and a separator between the positive electrode and the negative electrode.

At least some of the above and other features of the invention are set out in the claims.

**BRIEF DESCRIPTION OF THE DRAWINGS**

The accompanying drawings are included to provide a further understanding of the present disclosure, and are incorporated in and constitute a part of this specification. The drawings illustrate embodiments of the present disclosure and, together with the description, serve to explain principles of the present disclosure.

FIG. 1 illustrates a simplified conceptual diagram showing a rechargeable lithium battery according to one or more embodiments of the present disclosure.

FIGS. 2-5 illustrate simplified diagrams each showing a rechargeable lithium battery according to one or more embodiments, where FIG. 2 is a cylindrical battery, FIG. 3 is a prismatic battery, and FIGS. 4 and 5 are pouch-type (kind) batteries.

FIGS. 6A and 6B illustrate enlarged views showing positive electrode active material layers of a rechargeable lithium battery according to one or more embodiments of the present disclosure.

FIG. 7A illustrates a scanning electron microscope (SEM) image showing a positive electrode active material of Preparation Example 1 of the present disclosure.

FIG. 7B illustrates a scanning electron microscope (SEM) image showing a positive electrode active material of Preparation Example 2 of the present disclosure.

## DETAILED DESCRIPTION

Hereinafter, embodiments of the present disclosure will be described clearly and in more detail to such an extent that those skilled in the art easily implement the present disclosure. In order to sufficiently understand the configuration and effect of the present disclosure, one or more embodiments of the present disclosure will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In this description, it will be understood that, if (e.g., when) an element is referred to as being on another element, the element or component may be directly on the other element or intervening elements may be present between therebetween. In contrast, if (e.g., when) an element is referred to as being "directly on" another element, there are no intervening elements present. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form (e.g., "a," "an," and/or "the") may include the expression of plural form, including "at least one," unless the context clearly dictates otherwise. In some embodiments, unless otherwise specially noted, the phrase "A or B" may indicate "A but not B", "B but not A", and "A and B". The terms "comprises," "includes," "comprising," "including," "comprise," "include," "having," "has," and/or "have," as utilized in this description, are intended to designate the presence of an embodied aspect, number, step (e.g., act or task), element, and/or a (e.g., any suitable) combination thereof do not preclude or exclude the presence or addition of one or more other features, numbers, steps (e.g., acts or tasks), elements, components, and/or a (e.g., any suitable) combination thereof.

As utilized herein, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" may encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" indicates that any additional components will not materially affect the chemical, physical, optical or electrical properties of the semiconductor film.

Further, in this specification, the phrase "on a plane," or "plan view," indicates viewing a target portion from the top, and the phrase "on a cross-section" indicates viewing a cross-section formed by vertically cutting a target portion from the side.

The term "particle diameter", "particle size", and/or the like as utilized herein refers to an average diameter of particles if (e.g., when) the particles are spherical, and refers to an average major axis length of particles if (e.g., when) the particles are non-spherical. For example, a particle diameter may be an average particle diameter. In some embodiments, a particle diameter refers to an average particle diameter ($D_{50}$), which refers to the diameter of particles at a cumulative volume of about 50 vol% in particle size distribution. The average particle diameter ($D_{50}$) may be measured by a method widely suitable (known) to those skilled in the art, for example, by a particle size analyzer, or by utilizing a transmission electron microscope (TEM) image or a scanning electron microscope (SEM) image. In one or more embodiments, the average particle diameter may be measured by a measurement device utilizing dynamic light-scattering, wherein data analysis is conducted to count the number of particles for each particle size range, and an average particle diameter ($D_{50}$) value may then be obtained through calculation. Also, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter ($D_{50}$) based on about 50% of particle diameter distribution may be calculated in the measurement instrument.

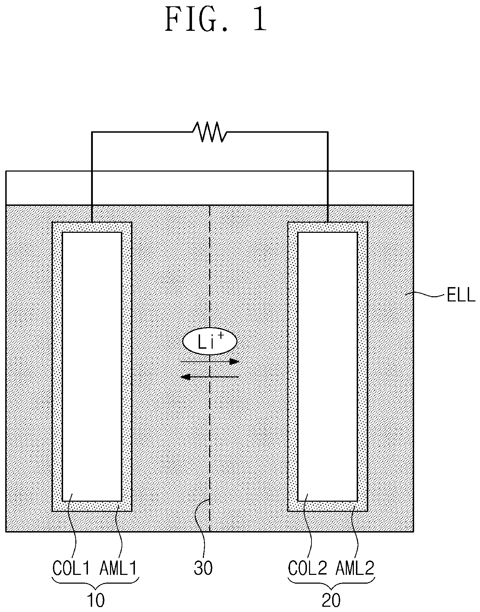

FIG. 1 is a simplified conceptual diagram of a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 is arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be immersed in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

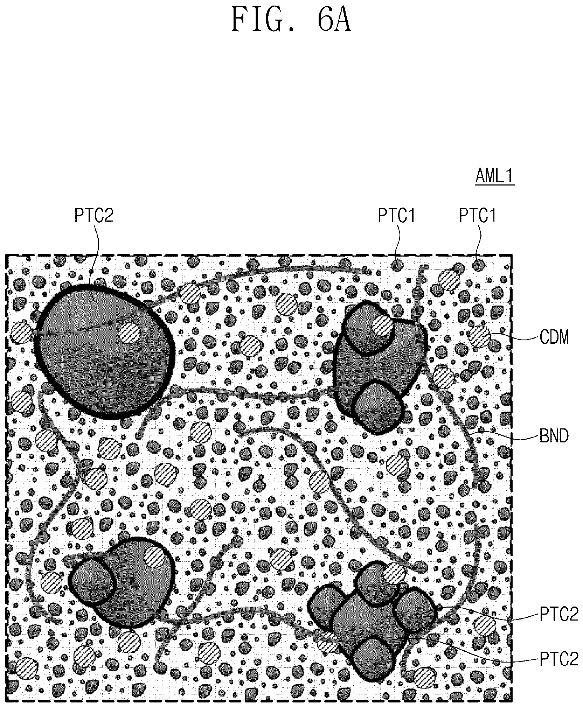

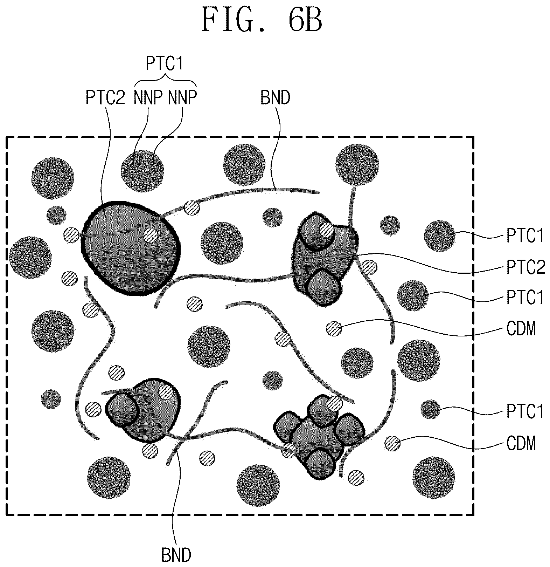

The positive electrode 10 for a rechargeable lithium battery includes a current collector COL1 and a positive electrode active material layer AML1 on the current collector COL1. The positive electrode active material layer AML1 includes a positive electrode active material and further includes a binder and a conductive material. Detailed description on the positive electrode active material layer AML1 according to one or more embodiments of the present disclosure is described with reference to FIGS. 6A and 6B. Al may be utilized as the current collector COL1, but the present disclosure is not limited thereto.

**Negative Electrode 20**

The negative electrode 20 for a rechargeable lithium battery may include a current collector COL2, and a negative electrode active material layer AML2 on the current collector COL2. The negative electrode active material layer AML2 may include a negative electrode active material and may further include a binder and/or a conductive material (e.g., electron conductor).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material, based on a total weight (100 wt%) of the negative electrode active material layer AML2.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is utilized as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include sodium (Na), potassium (K), or lithium (Li).

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be utilized to impart conductivity to the electrode. Any material that does not cause chemical change and is an electron conductive material may be utilized in the battery. Examples of the conductive material may include: a carbon-based material such as natural graphite, artificial graphite, carbon black, acetylene black, Ketjen black, a carbon fiber, a carbon nanofiber, and/or carbon nanotube; a metal-based material including copper, nickel, aluminium, silver, and/or the like in a form of a metal powder and/or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping into and de-doping from lithium, or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and/or a metal selected from among Na, K, rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material capable of doping into and de-doping from lithium may be a Si-based negative electrode active material and/or a Sn-based negative electrode active material. The Si-based negative electrode active material may include silicon, a silicon-carbon composite, $SiO_x$ (where $0 < x \leq 2$, e.g., $SiO_2$), a Si-Q alloy (where Q is selected from among an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_y$ (where $0 < y \leq 2$, e.g., $SnO_2$), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core), in which primary silicon particles are assembled (e.g., the primary silicon particles are assembled (agglomerated) to form the secondary particle as a core), and an amorphous carbon first coating layer (shell) on the surface of the secondary particle (e.g., the secondary particle is coated with the amorphous carbon coating layer). The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and/or silicon particles and an amorphous carbon first coating layer on a surface of the core.

The Si-based negative electrode active material and/or the Sn-based negative electrode active material may be utilized in combination with a carbon-based negative electrode active material.

**Separator 30**

Depending on the type (kind) of the rechargeable lithium battery, the separator 30 is present between the positive electrode 10 and the negative electrode 20. The separator 30 may include polyethylene, polypropylene, polyvinylidene fluoride, or a multilayer film of two or more layers of polyethylene, polypropylene, and/or polyvinylidene fluoride, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a first coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of one polymer selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON®), or a copolymer or mixture of two or more thereof.

The organic material may include a polyvinylidene fluoride-based polymer and/or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one first coating layer, or a first coating layer including an organic material and a first coating layer including an inorganic material may be stacked.

**Electrolyte Solution ELL**

The electrolyte solution ELL for a rechargeable lithium battery may include a non-aqueous organic solvent and/or a lithium salt.

The non-aqueous organic solvent may serve as a medium for transmitting ions taking part in the electrochemical reaction of a battery (e.g., the rechargeable lithium battery).

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (where R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be utilized alone or in combination of two or more.

In some embodiments, if (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in a battery (e.g., the rechargeable lithium battery), enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl) imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

**Rechargeable Lithium Battery**

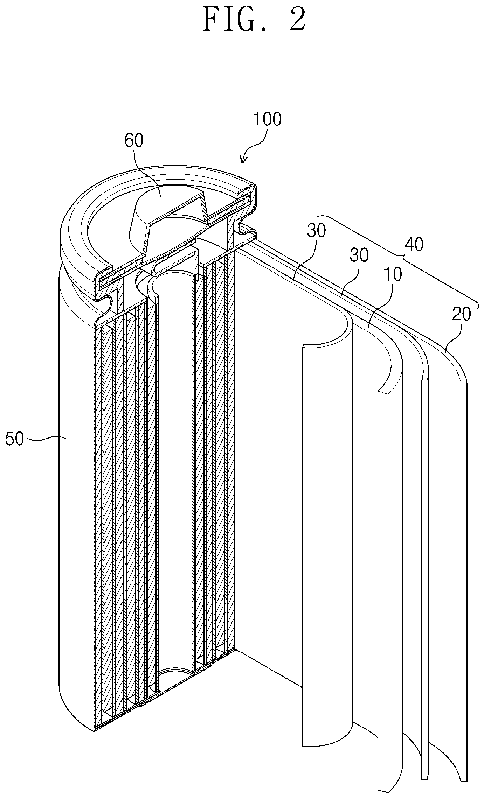

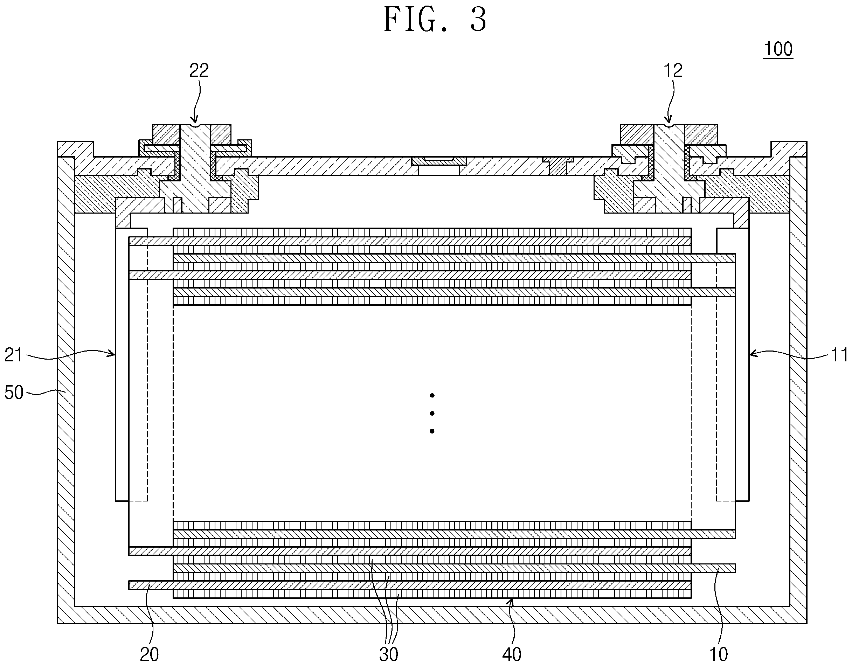

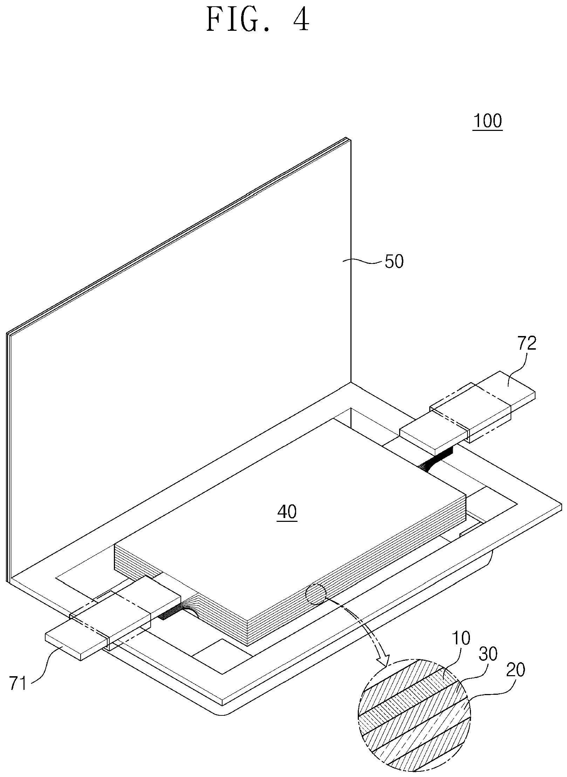

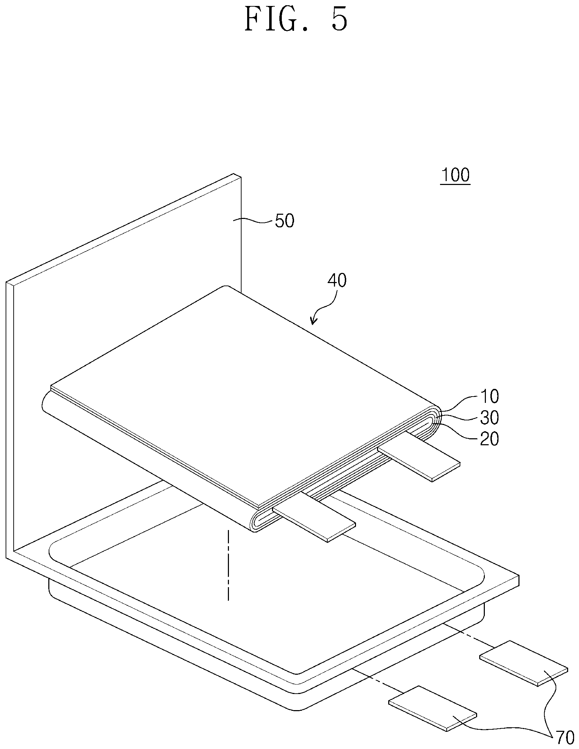

The rechargeable lithium battery may be classified into cylindrical, prismatic, pouch, or coin-type (kind) batteries, and/or the like depending on their shape. FIGS. 2 to 5 are schematic views illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in each of FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

**Positive Electrode Active Material Layer AML1**

FIG. 6A and FIG. 6B each illustrates an enlarged view showing a positive electrode active material layer of a rechargeable lithium battery, according to one or more embodiments of the present disclosure. Referring to FIG. 6A, as discussed herein, the positive electrode active material layer AML1 (see FIG. 1) includes a first particle PTC1, a second particle PTC2, a conductive material CDM, and a binder BND. A plurality of the first particles PTC1 and a plurality of the second particles PTC2 constitute a positive electrode active material according to one or more embodiments of the present disclosure.

The content (e.g., amount) of the positive electrode active material (e.g., the plurality of first particles PTC1 and the plurality of second particles PTC2) in the positive electrode active material layer AML1 may range from about 90 wt% to about 99 wt% relative to (e.g., based on) about a total weight (100 wt%) of the positive electrode active material layer AML1. Each of the contents of the binder BND and the conductive material CDM may be about 0.5 wt% to about 5 wt% relative to (e.g., based on) about a total weight (100 wt%) of the positive electrode active material layer AML1.

The binder BND may combine the plurality of first particles PTC1, the plurality of second particles PTC2, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material CDM may be utilized to improve the conductivity of the positive electrode active material layer AML1. Any conductive material that does not cause a chemical change of the positive electrode active material layer AML1 may be utilized without limitation as the conductive material CDM. For example, the conductive material CDM may include: a carbon-based material such as natural graphite, artificial graphite, carbon black, acetylene black, Ketjen black, carbon fiber, carbon nano-fiber, and carbon nano-tube; a metal-based material containing copper, nickel, aluminium, silver and/or the like and having a metal powder or metal fiber form; a conductive polymer such as a polyphenylene derivative; and/or a (e.g., any suitable) mixture thereof.

Hereinafter, each of the plurality of first particles PTC1 and the plurality of second particles PTC2 is described in more detail elsewhere herein.

**First Particle PTC1**

Referring to FIG. 6A, the first particle PTC1 may have a single particle form. In the description, the single particle may refer to a sole particle that does not have a grain boundary inside. The single particle has a morphology phase, and may refer to a single particle, a monolith structure, a monolithic structure, or a non-agglomerated (and/or non-aggregated) particle, in which the particles exist as an independent phase that are not agglomerated. For example, the single particle may be a single crystal, a solely separated form, and/or independently divided. In one or more embodiments, the single particle (e.g., first particle PTC1) may be a particle containing several crystals. The single particle may be a solely separated form. In one or more embodiments, the single particle (e.g., first particle PTC1) may be in the form of 2 to 100 single particles attached to each other.

The first particle PTC1 may be a positive electrode active material of a nano type (kind). The first particle PTC1 may include at least one (e.g., may include or be one) primary particle. In one or more embodiments, the primary particles may attached (and/or clustered) to have a particle form that is similar to that of the second particle PTC2. Though the primary particles attached (and/or clustered), the first particle PTC1 may not be spherical like the second particle PTC2. For example, the first particle PTC1 may have a random shape.

The plurality of first particles PTC1 may be provided in one or more suitable sizes. For example, the average particle diameter of the plurality of first particles PTC1 may be about 500 nm to about 2.5 $\mu$m, or about 1 $\mu$m. The minimum particle diameter of the plurality of first particles PTC1 (e.g., the particle diameter of the primary particles of the first particle PTC1) may be about 100 nm to about 500 nm, or about 100 nm to about 200 nm.

In one or more embodiments, the average particle diameter may be measured by a particle size analyzer. The average particle diameter may refer to the diameter of particles at an accumulated volume of about 50 vol% ($D_{50}$) in particle size distribution.

In one or more embodiments, the minimum particle diameter (e.g., the diameter of the primary particles of the first particle PTC1) may refer to the diameter measured by randomly selecting about 30 primary particles on an electron microscope image of the plurality of first particles PTC1.

The porosity of the plurality of first particles PTC1 may be greater than about 40%. Here, porosity (n) may be defined as the pore volume (Vp) divided by the total volume (Vt) of particles, or

$$n = \frac{V_p}{V_t}$$

The span value ($\frac{D_{90}-D_{10}}{D_{50}}$) of the plurality of first particles PTC1 (e.g., a width of particle size distribution of the first particles PTC1), analyzed by a particle size analyzer, may be deviated from (e.g. outside) a range from about 0.3 to about 0.75. The terms "$D_{10}$", "$D_{50}$", and "$D_{90}$", as used herein, are each an average particle diameter exhibited by a cumulative volume of about 10, 50, or 90 volume%, respectively, of the particles in a particle size distribution.

In one or more embodiments, the first particle PTC1 may include a first coating layer on the surface of the first particle PTC1. The first coating layer may cover the entire surface of the first particle PTC1 or may cover a portion of the surface of the first particle PTC1. For example, the first coating layer may include carbon and/or a carbon-containing compound. The first coating layer may further include at least one selected from the group consisting of a titanium-containing compound, a magnesium-containing compound, an aluminium-containing compound, and/or a vanadium-containing compound. The metal-containing compound such as the titanium-containing compound, the magnesium-containing compound, the aluminium-containing compound, and/or the vanadium-containing compound may be, for example, a metal oxide, a metal hydroxide, a metal carbonate, a synthesized compound thereof, and/or a (e.g., any suitable) mixture thereof. The metal-containing compound may further include other metal and/or non-metal elements. For example, the metal-containing compound may further include lithium. The first particle PTC1 may show improved structural stability and improved electrical conductivity by the first coating layer.

The first particle PTC1 may include an olivine-based lithium compound represented by Chemical Formula 1.

Chemical Formula 1 $\quad\quad$ $Li_{a1}Mn_{b1}Fe_{x1}B_{y1}PO_{4-c1}$

In Chemical Formula 1, $0.8 \leq a1 \leq 1.2$, $0.5 \leq b1 \leq 0.899$, $0.1 \leq x1 \leq 0.499$, $0.001 \leq y1 \leq 0.05$, $0 < c1 \leq 0.05$ and $b1 + x1 + y1 = 1$ are satisfied. B is at least one element selected from the group consisting of Mg, titanium (Ti), vanadium (V) and/or Al. B may be a dopant doped into the first particle PTC1. For example, B may include Ti.

The first particle PTC1 may further include carbon derived from the first coating layer. A content (e.g., amount) of the carbon element in the first particle PTC1 may be about 0.5 wt% to about 5 wt%, about 0.5 wt% to about 3 wt%, about 0.5 wt% to about 2 wt%, or about 1.5 wt% to about 2.5 wt% based on about 100 wt% of a total weight of the first particle PTC1.

A method for measuring the element content (e.g., amount) in the first coating layer of the first particle PTC1 may include performing a scanning electron microscopy-energy dispersive X-ray spectroscopy (SEM-EDS) on the plurality of first particles PTC1. Through the analysis, the carbon and metal contents in the first coating layer may be confirmed. As a method for measuring the element content (e.g., amount) in the first coating layer, an inductively coupled plasma-mass spectrometry (ICP-MS), an inductively coupled plasma optical emission spectroscopy (ICP-OES) and/or the like may be utilized in addition to the SEM-EDS.

Referring to FIG. 6B, the first particle PTC1 may have a secondary particle form in which a plurality of primary particles NNP are aggregated and/or agglomerated to each other. The secondary particle may have a form in which 2 to 100 primary particles NNP are agglomerated. A primary particle NNP is a minimum crystal unit constituting the secondary particle and is a form distinguished from a single particle. The first particle PTC1 may have a spherical and/or elliptical shape.

In one or more embodiments, the first particle PTC1 may include a coating layer on the surface thereof. The coating layer may cover the entire surface of the first particle PTC1 or a portion of the surface of the first particle PTC1. For example, the coating layer may include carbon and/or a carbon-containing compound. The first particle PTC1 may have improved structural stability or improved electrical conductivity by the coating layer.

The coating layer may further include at least one selected from the group consisting of a titanium-containing compound, a magnesium-containing compound, and/or a vanadium-containing compound. The metal-containing compound, such as the titanium-containing compound, the magnesium-containing compound, and/or the vanadium-containing compound, may be, for example, a metal oxide, a metal hydroxide, a metal carbonate, a synthesized compound thereof, and/or a (e.g., any suitable) mixture thereof. The metal-containing compound may further include other metal and/or non-metal elements. For example, the metal-containing compound may further include lithium.

In one or more embodiments, the first particle PTC1 (e.g., the first particle PTC1 in the secondary particle form) may further include a grain boundary coating layer on the surface of each of the primary particles NNP. The grain boundary coating layer may be present in the first particle PTC1. The grain boundary coating layer may be formed along the interface between the primary particles NNP inside. For example, the grain boundary coating layer may refer to a material coated on the grain boundary in the first particle PTC1. The grain boundary coating layer may include carbon and/or a carbon-containing compound. The grain boundary coating layer may further include at least one selected from the group consisting of a titanium-containing compound, a magnesium-containing compound, and/or a vanadium-containing compound.

The interior of the above-described first particle PTC1 may refer to the entire interior of the first particle PTC1 excluding the surface of the first particle PTC1. For example, the inside of the first particle PTC1 may refer to an entire (e.g., substantially entire) inner region (starting) from about 10 nm depth (below) from the outer surface of the first particle PTC1. For example, in one or more embodiments, this inner region starts from about 10 nm below the outer surface and may extend up to about 2 $\mu$m in depth.

Because the first particle PTC1 may further include the grain boundary coating part, structural stability may be reinforced, and a substantially uniform coating layer may be formed on the surface of the first particle PTC1. In some embodiments, because the first particle PTC1 may further include the grain boundary coating part, the electrical conductivity of the first particle PTC1 may be further improved.

The average particle diameter of the first particle PTC1 may be about 2 $\mu$m to about 15 $\mu$m, about 3 $\mu$m to about 10 $\mu$m, or about 3 $\mu$m to about 7 $\mu$m. For example, the first average particle diameter of the plurality of first particles PTC1 may be about 5 $\mu$m. The average particle diameter of the plurality of first particles PTC1 may be smaller than the average particle diameter of the plurality of second particles PTC2, which is described elsewhere herein. In one or more embodiments, the average particle diameter may be measured by a particle size analyzer. The average particle diameter may refer to the diameter of particles at an accumulated volume of about 50 vol% ($D_{50}$) in particle size distribution.

The particle diameter of the primary particles NNP of the plurality of first particles PTC1 may be about 10 nm to about 400 nm, about 20 nm to about 300 nm, about 50 nm to about 200 nm, or about 100 nm to about 200 nm. In one or more embodiments, the particle diameter of the primary particles NNP may refer to a diameter measured by randomly selecting about 30 primary particles NNP on an electron microscope image on a positive electrode active material. The particle diameter of the primary particle NNP may be substantially uniform.

The first particle PTC1 may have a spherical shape, in which the primary particles NNP with a nano size are agglomerated. The first particle PTC1 may exhibit the characteristics as follow through the close agglomeration of the primary particles NNP with each other. The first particle PTC1 may have a spherical or elliptical shape. The average particle diameter ($D_{50}$) of the first particles PTC1 may be about 2 $\mu$m to about 15 $\mu$m. The porosity of the plurality of first particles PTC1 may be about 20% to about 40%. The span value of the plurality of first particles PTC1 (e.g., a width of particle size distribution of the first particles PTC1) analyzed by a particle size analyzer may be about 0.3 to about 0.75.

In the context of the present disclosure and unless otherwise defined, the first particle PTC1 may exist in two forms: single particles and secondary particles. Single particles are individual, non-agglomerated or non-aggregated particles that may be single crystals or contain several crystals. They have a uniform structure without internal grain boundaries, which contributes to their high structural stability and minimal chemical changes during repeated charging and discharging. Single particles typically have a smaller average particle diameter and are provided in various sizes, enhancing the charge and discharge efficiency, low-temperature properties, and lifetime characteristics of the rechargeable lithium battery. On the other hand, secondary particles are agglomerations and/or aggregations of multiple first primary particles, forming a polycrystal structure. These secondary particles may include a grain boundary (interface) coating layer, which improves structural stability and electrical conductivity. The average particle diameter of secondary particles is larger compared to single particles, and they may have a higher carbon content derived from the coating layer.

**Second Particle PTC2**

Referring to FIGS. 6A and 6B, a second particle PTC2 may have a single particle form similar to the above-described first particle PTC1. The definition of the single particle may be the same as or similar to the single particle that is previously defined in paragraphs regarding the first particle PTC1. In one or more embodiments, the second particle PTC2 may have a form constituted with one single particle. In one or more embodiments, the second particle PTC2 may have a form in which a plurality of single particles are attached or clustered to each other. Because the positive electrode active material according to the present disclosure may include the plurality of second particles PTC2 with (in) a single particle form, a rechargeable battery (e.g., the rechargeable lithium battery) with high capacity and high energy density may be accomplished.

In one or more embodiments, the second particle PTC2 may include a second coating layer on the surface of the second particle PTC2. By including the second coating layer, the second particle PTC2 may effectively suppress or reduce structural collapse due to repeated charging and discharging. Accordingly, the lifetime characteristics of the rechargeable battery (e.g., the rechargeable lithium battery) may be improved.

The second coating layer may include a boron-containing compound, an aluminium-containing compound and/or a (e.g., any suitable) combination thereof. The metal-containing compound in the second coating layer may be, for example, a metal oxide, a metal hydroxide, a metal carbonate, a synthesized compound thereof, and/or a (e.g., any suitable) mixture thereof. The metal-containing compound may further include other metal and/or nonmetal elements. For example, the second coating layer may further include lithium, manganese, and/or nickel.

The average particle diameter of the plurality of second particles PTC2 may be about 2 $\mu$m to about 15 $\mu$m, about 2 $\mu$m to about 10 $\mu$m, about 4 $\mu$m to about 10 $\mu$m or about 2 $\mu$m to about 8 $\mu$m. The average particle diameter of the plurality of second particles PTC2 is greater than the above-described average particle diameter of the plurality of first particles PTC1. If (e.g., when) the second particle PTC2 includes a plurality of single particles, the average size of the single particles of the second particle PTC2 may be greater than the average particle diameter of the plurality of first particles PTC1.

In one or more embodiments, the particle diameter may be obtained by measuring a diameter by randomly selecting about 30 second particles PTC2 on an electron microscope image on a positive electrode active material, and taking a diameter of the particles (e.g., the 30 second particles) at an accumulated volume of about 50 vol% ($D_{50}$) in particle size distribution as the average particle diameter.

The second particle PTC2 includes a lithium compound represented by Chemical Formula 2.

$$\text{Chemical Formula 2} \qquad Li_{a2}Fe_{b2}O_{c2}$$

In Chemical Formula 2, $1 \leq a2 \leq 5$, $0.9 \leq b2 \leq 1.1$, and $2 \leq c2 \leq 4$.

The second particle PTC2 may further include carbon derived from the above-described coating layer. The carbon element content (e.g., amount) in the second particle PTC2 may be about 0.5 wt% to about 5 wt%, about 0.5 wt% to about 3 wt%, or about 0.5 wt% to about 2 wt%. The carbon content (e.g., amount) of the second particle PTC2 may be smaller than the carbon content (e.g., amount) of the first particle PTC1 when the first particle PTC1 is a secondary particle. This is because the second particle PTC2 is a single particle, and the smooth formation of a coating layer is difficult compared to the first particle PTC1, which is a secondary particle in some embodiments.

The second particle PTC2 may participate in the formation of a solid electrolyte interface (SEI) film on the surface of a negative electrode during charging and discharging. The second particle PTC2 may be converted to irreversible Li, which no longer participates in charge and discharge reactions. Accordingly, defects of reducing the capacity of a positive electrode active material layer AML1 may occur.

The second particle PTC2 according to one or more embodiments of the present disclosure includes an oxide containing iron (Fe). The second particle PTC2 may serve as a sacrificial positive electrode that may compensate irreversible Li. The second particle PTC2 may be decomposed in a formation process to provide Li, and may not participate in subsequent charge and discharge processes.

For example, if (e.g., when) defining $Li_5FeO_4$ as a compound constituting the second particle PTC2, $Li_5FeO_4$ may be decomposed at between about 3.7 V and about 3.9 V, and 4 Li atoms may be provided in contrast to Li. If (e.g., when) the second particle PTC2 including the compound is utilized in an amount range to be described in more detail elsewhere herein, a role compensating for irreversible Li may be sufficiently performed.

The second particle PTC2 according to one or more embodiments of the present disclosure may include $Li_5FeO_4$, $LiFeO_2$, $LiFe_5O_8$, and/or a (e.g., any suitable) combination thereof. For example, the second particle PTC2 may include $Li_5FeO_4$. Because $Li_5FeO_4$ may provide lots of Li atoms in a formation process, more irreversible Li may be compensated. Accordingly, the effect of the sacrificial positive electrode may be achieved to a greater extent.

In other words, the second particle PTC2 is a lithium compound with a specific chemical formula that may include elements like Al or Mg to enhance surface and structural stability. These particles are designed to have high capacity and energy density. The second particle PTC2 typically exists in a single particle form, meaning it does not have internal grain boundaries and may be a single crystal or a collection of several crystals. These single particles may vary in size, with an average particle diameter ranging from 2 $\mu$m to 8 $\mu$m, and they may include a coating layer to prevent structural collapse during repeated charging and discharging, thereby improving the battery's lifetime characteristics.

Additionally, the second particle PTC2 may act as a sacrificial positive electrode, providing irreversible lithium during the initial charge and discharge cycles, which helps form a solid electrolyte interface (SEI) on the negative electrode. This process ensures that the lithium from the main active material is not bound to irreversible lithium, thereby maximizing the battery's capacity and energy density. The second particle PTC2 may include compounds like $Li_5FeO_4$, which decompose to provide lithium atoms, further enhancing its role as a sacrificial electrode. The inclusion of these particles in the positive electrode active material may significantly improve the overall performance of a rechargeable lithium battery.

The positive electrode active material according to one or more embodiments of the present disclosure is described in more detail with reference to FIGS. 6A and 6B again. The positive electrode active material of the present disclosure includes the plurality of first particles PTC1 and the plurality of second particles PTC2. The mixing ratio of the plurality of first particles PTC1 and the plurality of second particles PTC2 in the positive electrode active material may be about 95:5 to about 99.5:0.5. For example, the mixing ratio may be about 99:1 to about 99.5:0.5. The content (e.g., amount) of the plurality of first particles PTC1 may be greater than the content (e.g., amount) of the plurality of second particles PTC2 in the positive electrode active material.

Because the second particle PTC2 includes a high lithium-based positive electrode active material, higher capacity may be accomplished compared to the first particle PTC1. In the positive electrode active material according to this embodiment, the plurality of first particles PTC1 and the plurality of second particles PTC2 are mixed in an appropriate or suitable ratio, and capacity and an operating voltage may be improved compared to a common lithium manganese iron phosphate (LMFP) battery.

The above-described compound represented by Chemical Formula 2 (high lithium-based positive electrode active material) may have low electrical conductivity compared to the compound represented by Chemical Formula 1. In the present disclosure, if (e.g., when) the second particle PTC2 utilizes a single particle (in a form of single particle), electrical conductivity and energy density may be improved.

The first particle PTC1 has advantages in having high stability and long lifetime. By utilizing the stable structure of the plurality of first particles PTC1 as the main material of the positive electrode active material, the relatively low stability and short lifetime of the plurality of second particles PTC2 may be compensated.

The positive electrode active material of the present disclosure may improve mixture density, capacity, and energy density by mixing the plurality of second particles PTC2 with several micrometers in size with the base of the plurality of first particles PTC1 with hundreds of nanometers in size. In one or more embodiments, the pellet density of the positive electrode active material of the present disclosure may be about 2.0 g/cc to about 2.5 g/cc. The pellet density may be determined by compressing the positive electrode active material into a pellet under a specific pressure (e.g., 100 MPa), measuring the mass and volume of the pellet, and calculating the density using the formula: $\rho_{pellet} = W_{dry} / V$, where $W_{dry}$ is the dry mass of the pellet and V is the volume obtained from its measured dimensions. Alternatively, the pellet density may be measured using Archimedes' principle by submerging the pellet in a liquid and calculating the volume based on buoyancy. The rechargeable lithium battery including the positive electrode active material of the present disclosure may exhibit improved low-temperature properties.

Because the plurality of first particles PTC1 that are single particles have a very small average particle diameter, a large amount of a binder BND may be desired or required to attach the plurality of first particles PTC1 to a current collector COL1 (see FIG. 1). Because the positive electrode active material of the present disclosure additionally includes the plurality of second particles PTC2 having a large average particle diameter as well as the plurality of first particles PTC1, the positive electrode active material layer AML1 may attach to the current collector COL1 smoothly. For example, the content (e.g., amount) of the binder BND in the positive electrode active material layer AML1 may be reduced due to the plurality of second particles PTC2.

A rechargeable lithium battery (see FIG. 1) including the positive electrode active material according to one or more embodiments of the present disclosure may exhibit an average voltage of about 3.2 V to about 3.7 V during discharging about 0.1 C at between about 2.5 V and about 4.4 V. In some embodiments, the charging peaks appearing at a voltage between about 3.55 V and about 4.25 V may be 3 to 5 in a differential capacity (dQ/dV)-voltage charging graph for the rechargeable lithium battery of the present disclosure. In the graph, the ratio (IB/IA) of the intensity of peak B (IB) at between about 4.1 V and about 4.25 V to the intensity of peak A (IA) at between about 3.41 V and about 3.55 V may be about 0.005 to about 0.008.

## Method for Preparing Positive Electrode Active Material

A method for preparing the plurality of first particles PTC1 according to one or more embodiments of the present disclosure is described in more detail. An iron phosphate precursor, a lithium source, a carbon source, and/or a dopant source may be added to a solvent and mixed. For example, the solvent may be water, ethanol, and/or the like. The iron phosphate precursor may be a compound containing both (e.g., simultaneously) iron (Fe) and phosphorus (P), and/or a (e.g., any suitable) mixture of a compound containing iron (Fe) and a compound containing phosphorus (P). For example, the iron phosphate precursor may include $FePO_4 \cdot H_2O$, and/or a (e.g., any suitable) mixture of $FeSO_4$ and $H_3PO_4$. A manganese-containing precursor may be used as the manganese source in the preparation of the first particles.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate, and/or lithium citrate.

The carbon source may include at least one selected from the group consisting of glucose, sucrose, fructose, cellulose, starch, citric acid, polyacrylic acid, polyethylene glycol, and/or dopamine.

The dopant source may include an oxide containing a dopant metal, and/or a chloride containing a dopant metal. For example, the dopant source may include at least one selected from the group consisting of titanium oxide, magnesium oxide, vanadium oxide, and/or aluminium oxide.

The mixture may be subjected to wet grinding. The wet grinding may be performed utilizing a common wet mill capable of controlling temperature. For example, the wet grinding may use at least one selected from the group consisting of a bead mill, ball mill, attrition mill, apex mill, super mill, and/or basket mill. Through the wet grinding process, the particles in the mixture may be ground to a fine size.

A dried mixture may be formed by removing the solvent from the mixture. In one or more embodiments of the present disclosure, the formation of the dried mixture may include performing a direct evaporation method with respect to the mixture. For example, the direct evaporation method may include static drying and/or spray drying.

The dried mixture may be baked under an inert atmosphere. The inert atmosphere may be a nitrogen atmosphere and/or an argon atmosphere. The temperature of the baking process may be about 500°C to about 1000°C, or about 600°C to about 800°C. The performance time of the baking process may be about 4 hours to about 20 hours, or about 6 hours to about 12 hours. Through the baking of the dried mixture, the plurality of first particles PTC1 including the compound represented by Chemical Formula 1 may be formed.

A dry grinding process may be performed for the plurality of baked first particles PTC1. As a result, the plurality of first particles PTC1 may have a single particle form as shown in FIG. 6A.

The method for preparing the plurality of first particles PTC1 according to one or more embodiments of the present disclosure is described in more detail. A manganese iron phosphate precursor, a lithium source, a carbon source, and/or a dopant source may be added to a solvent and mixed. For example, the solvent may be water, ethanol, and/or the like.

The manganese iron phosphate precursor may be: a compound containing manganese (Mn), iron (Fe), and/or phosphorus (P) simultaneously; a mixture including a compound containing manganese (Mn) and a compound containing iron (Fe) and/or phosphorus (P); and/or a (e.g., any suitable) mixture including a compound containing manganese (Mn), a compound containing iron (Fe), and/or a compound containing phosphorus (P). For example, the manganese iron phosphate precursor may include: $Mn_xFe_{1-x}PO_4 \cdot H_2O$; a mixture of $MnCO_3$ and $FePO_4 \cdot H_2O$; and/or a (e.g., any suitable) mixture of $MnCO_3$, $FeSO_4$, and $H_3PO_4$. Here, x may be about 0.5 to about 0.9.

A wet grinding may be performed with respect to the mixture.

A dried mixture may be formed by removing the solvent from the mixture. The formation of the dried mixture may include performing a direct evaporation method with respect to the mixture. For example, the direct evaporation method may include static drying and/or spray drying. In order to form the plurality of first particles PTC1 in a single particle form, the static drying may be utilized.

The dried mixture may be baked under an inert atmosphere. Through the baking of the dried mixture, the plurality of first particles PTC1 including the compound represented by Chemical Formula 1 may be formed.

A dry grinding process may be performed with respect to the plurality of baked first particles PTC1. As a result, the plurality of first particles PTC1 may have a single particle form.

By mixing the plurality of first particles PTC1 and the plurality of second particles PTC2 prepared in an appropriate or suitable ratio, the positive electrode active material according to one or more embodiments of the present disclosure may be formed.

A method for preparing the secondary particle form of the plurality of first particles PTC1 according to one or more embodiments of the present disclosure is described in more detail herein. As one or more embodiments of the present disclosure, the wet grinding may not be provided. For example, in order to maximize or increase the average particle diameter of the plurality of first particles PTC1 finally prepared, the wet grinding for the precursor particles may not be provided.

A dried mixture may be formed by removing the solvent from the mixture. In one or more embodiments of the present disclosure, the formation of the dried mixture may include performing spray drying of the mixture. The spray drying may utilize a commonly utilized spray drying device. For example, the spray drying may utilize at least one selected from among an ultrasonic wave spray drying device, an air nozzle spray drying device, an ultrasonic wave nozzle spray drying device, a filter expansion droplet generation device, and/or a static spray drying device.

By the wet grinding process, fine particles in the size of the primary particles NNP may be agglomerated with each other (e.g., an agglomeration of the primary particles NNP) through the spray drying process to form secondary particles. Accordingly, by controlling the flow amount, flow rate, temperature, and/or retention time in the reactor of the carrier gas, and internal pressure in the spray drying process, the plurality of first particles PTC1 may be formed into a secondary particle form with a desired or suitable size.

In one or more embodiments, the mixture that is a target for spray drying may have the total solid content (e.g., amount) of about 20 wt% to about 40 wt% based on a total weight (100 wt%) of the mixture. The total solid content (e.g., amount) may refer to the weight of solid materials (e.g., dried mixture) remaining after evaporating the solvent on the basis of (e.g., based on) the total weight of the mixture (e.g., spray solution), converted to a percentage. In one or more embodiments, the mixture (e.g., the spray solution) may have the total solid content (e.g., amount) of about 30 wt% based on the total weight (100 wt%) of the mixture.

If (e.g., when) the total solid content (e.g., amount) is less than about 20 wt% based on the total weight (100 wt%) of the mixture, the average particle diameter of the plurality of first particles PTC1 may decrease, and defects of reducing productivity may occur. If (e.g., when) the total solid content (e.g., amount) is greater than about 40 wt% based on the total weight (100 wt%) of the mixture, the control of the average particle diameter of the plurality of first particles PTC1 may become difficult, and the deviation in the size of the plurality of first particles PTC1 may increase.

The spray solution according to this embodiment may have a viscosity of about 1500 mPa·s to about 2500 mPa·s with the total solid content (e.g., amount). For example, the spray solution may have a viscosity of about 2000 mPa·s.

In one or more embodiments, the spray drying may be performed at a temperature of about 100°C to about 300°C. The spray gas (for example, air) utilized in the spray drying may be injected at a first temperature and exhausted at a second temperature. For example, the first temperature may be about 200°C to about 250°C. The second temperature may be about 80°C to about 150°C.

The flow rate of the spray solution in the spray drying may be about 30 mL/min to about 80 mL/min. If (e.g., when) the flow rate is less than about 30 mL/min, defects of nozzle blocking phenomenon and productivity reduction may occur. If (e.g., when) the flow rate is greater than about 80 mL/min, defects of incomplete drying of the mixture may occur due to moisture condensation in a spray drier. The injection pressure of the spray solution may be about 0.3 MPa to about 0.7 MPa. For example, the injection pressure of the spray solution may be about 0.5 MPa.

The dried mixture may be baked under an inert atmosphere. The inert atmosphere may be a nitrogen atmosphere and/or an argon atmosphere. The temperature of the baking process may be about 500°C to about 1000°C, or about 600°C to about 800°C. The performance time of the baking process may be about 4 hours to about 20 hours, or about 6 hours to about 12 hours. Through the baking of the dried mixture, the plurality of first particles PTC1 including the compound represented by Chemical Formula 1 may be formed.

In the method for preparing the secondary particle form of the plurality of first particles PTC1 according to the present disclosure, a carbon source may be introduced to a manganese iron phosphate precursor, and a carbon coating layer may be uniformly (e.g., substantially uniformly) formed on the surface of the primary particles NNP. Then, the primary particles NNP may be closely agglomerated through the spray drying to form dense secondary spherical particles.

The plurality of second particles PTC2 according to one or more embodiments of the present disclosure may be a LFO (lithium iron oxide, e.g., $Li_5FeO_4$) that may alleviate Li ion inventory loss. The LFO may refer to a compound having a composition of $Li_5FeO_4$. The LFO may be effective for a graphite anode and may also be utilized as a pre-lithiation source for a Si anode. The LFO is a Li-rich cathode material and may have high anion redox reactivity. The LFO may be introduced as an additive in a cathode, and may induce low energy density due to the presence of byproducts in a cathode matrix. Additionally, the particle size of $Fe_2O_3$ starting material is a factor among factors determining the reactivity of the LFO.

By mixing the plurality of first particles PTC1 and the plurality of second particles PTC2, respectively prepared by the above-described methods, the positive electrode active material according to the present disclosure may be prepared. The plurality of first particles PTC1 and the plurality of second particles PTC2 may be mixed in a weight ratio of about 95:5 to about 99.5:0.5.

Carbon element analysis according to one or more embodiments of the present disclosure may be performed by an Elementar Micro Cube elemental analyzer. Particular operation method and conditions are as follows. About 1-2 mg of a sample was weighed in a tin cup, put in an automatic sampling tray, brought into a combustion tube via a ball valve, and burned at a combustion temperature of about 1000°C. After that, the burned gas was reduced utilizing reducing copper to form carbon dioxide. The carbon dioxide was detected utilizing a thermal conductivity detector (TCD).

In the method for measuring the carbon content (e.g., amount) according to one or more embodiments of the present disclosure, scanning electron microscopy-energy dispersive X-ray spectroscopy (SEM-EDS) was performed with respect to the surface of the particles, and quantitative analysis was performed. As the method for measuring the carbon content (e.g., amount), an inductively coupled plasma-mass spectrometry (ICP-MS), an inductively coupled plasma optical emission spectroscopy (ICP-OES), and/or the like may be utilized in addition to the SEM-EDS.

Hereinafter, the Examples and Comparative Examples are described. However, the Examples are only illustrations of the present disclosure, and the present disclosure is not limited to the Examples.

**Preparation Example 1: Preparation of First Particles in Single Particle Form and Secondary Particle Form**

A $Mn_{0.6}Fe_{0.4}PO_4$ manganese iron phosphate precursor, lithium carbonate, and titanium dioxide were mixed in a molar ratio of about 1:1.03:0.03. To the mixture, 12 wt% of glucose was added. A wet grinding process was performed by a ball milling with respect to the mixture. The mixture was evaporated and dried in a heating furnace tray, and put in a vacuum oven for drying at about 120°C for about 4 hours. The dried mixture was baked under a nitrogen atmosphere at about 750°C for about 10 hours. The baked product was ground to obtain first particles in a single particle form. The average size of the first particles was about 100 nm to about 300 nm.

In addition, the mixture was spray-dried under a spray pressure of 0.5 MPa and at a temperature of 230°C to evaporatively dry the mixture. The dried mixture was then calcined at 750°C for 10 hours under a nitrogen atmosphere to obtain first particles in a secondary particle form.

**Preparation Example 2: Preparation of Second Particles in Single Particle Form**

In order to prepare $Li_5FeO_4$, $LiOH \cdot H_2O$, and $Fe_2O_3$ were mixed in a ratio (e.g., amount) of Li:Fe=5:1, and the powder thus mixed was milled in a spex mill for about 30 minutes and then, manufactured into a pellet with a pressure of about 6.1 to about 6.3 tons. The pellet was synthesized at about 850°C for about 20 hours.

**Example 1-1: Preparation of Mixture of First Particles in Single Particle Form and Second Particles**

A positive electrode active material was prepared by mixing the plurality of first particles in a single particle form and the plurality of second particles in a mass ratio of about 99.5:0.5.

**Example 1-2: Preparation of Mixture of First Particles in Single Particle Form and Second Particles**

A positive electrode active material was prepared by mixing the plurality of first particles in a single particle form and the plurality of second particles in a mass ratio of about 99:1.

**Example 1-3: Preparation of Mixture of First Particles in Single Particle Form and Second Particles**

A positive electrode active material was prepared by mixing the plurality of first particles in a single particle form and the plurality of second particles in a mass ratio of about 97.5:2.5.

**Example 1-4: Preparation of Mixture of First Particles in Single Particle Form and Second Particles**

A positive electrode active material was prepared by mixing the plurality of first particles in a single particle form and the plurality of second particles in a mass ratio of about 95:5.

**Example 2-1: Preparation of Mixture of First Particles in Secondary Particle Form and Second Particles**

A positive electrode active material was prepared by mixing the plurality of first particles in a secondary particle form of Preparation Example 1 and the plurality of second particles in a mass ratio of about 99.5:0.5. (For example, the mixture was subjected to a spray drying process to form spherical secondary particles. The spray-dried particles may then be subsequently calcined to enhance the bonding between primary particles).

**Example 2-2: Preparation of Mixture of First Particles in Secondary Particle Form and Second Particles**

A positive electrode active material was prepared by mixing the plurality of first particles in a secondary particle form of Preparation Example 1 and the plurality of second particles in a mass ratio of about 99:1.

**Example 2-3: Preparation of Mixture of First Particles in Secondary Particle Form and Second Particles**

A positive electrode active material was prepared by mixing the plurality of first particles in a secondary particle form of Preparation Example 1 and the plurality of second particles in a mass ratio of about 97.5:2.5.

**Example 2-4: Preparation of Mixture of First Particles in Secondary Particle Form and Second Particles**

A positive electrode active material was prepared by mixing the plurality of first particles in a secondary particle form of Preparation Example 1 and the plurality of second particles in a mass ratio of about 95:5.

**Comparative Example 1-1: Preparation of Positive Electrode Active Material Composed of Only First Particles**

A positive electrode active material composed of only the plurality of first particles in a single particle form of Preparation Example 1 was prepared.

**Comparative Example 1-2: Preparation of Positive Electrode Active Material Composed of Only Second Particles**

A positive electrode active material composed of only the plurality of second particles in a single particle crystal form of Preparation Example 2 was prepared.

**Manufacture of Positive Electrode**

95 wt% of a final positive electrode active material (e.g., a mixture of the plurality of first particles and the plurality of second particles), 3 wt% of a polyvinylidene fluoride binder, and 2 wt% of a carbon black conductive material were mixed in an **N-**methylpyrrolidone solvent to prepare a positive electrode active material slurry. The positive electrode active material slurry was applied on an aluminium current collector, dried, and rolled to manufacture a positive electrode.

**Manufacture of Negative Electrode**

Graphite, a binder, and a conductive material were mixed in an **N-**methylpyrrolidone solvent to prepare a negative electrode active material slurry. The negative electrode active material slurry was applied on a copper current collector, dried, and rolled to manufacture a negative electrode.

**Fabrication of Rechargeable Lithium Battery**

A coin full cell was fabricated utilizing the positive electrode, and the negative electrode prepared. A polypropylene film (Celgard 3510) was utilized as a separator. As an electrolyte, an electrolyte solution obtained by mixing 1.3 M $LiPF_6$ with a mixture solvent of ethylene carbonate (EC): diethyl carbonate (DEC): fluoroethylene carbonate (FEC) (e.g., 2:6:2 by volume ratio) was utilized.

**Evaluation Example 1: Analysis on the Surface of Positive Electrode Active Material**

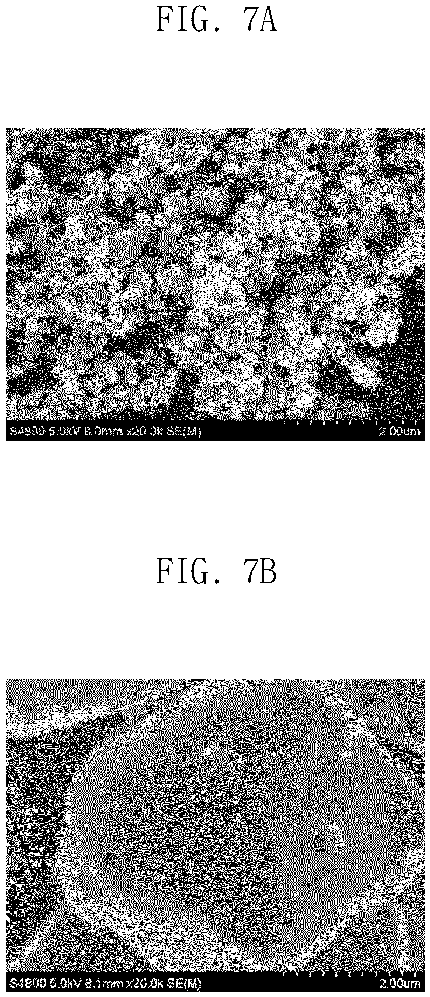

The scanning electron microscope (SEM) image of the first particles prepared in Preparation Example 1 is shown in FIG. 7A. The SEM image of the second particles prepared in Preparation Example 2 with a single crystal form is shown in FIG. 7B. Referring to FIG. 7A, it may be confirmed that the first particles according to one or more embodiments of the present disclosure have a fine single particle form with a nano size. Referring to FIG. 7B, it may be confirmed that the second particles according to one or more embodiments of the present disclosure have a single crystal form with a micrometer size. It may be confirmed that the second particle has a single crystal form and has a size greater than the first particle with reference to FIG. 7A.

**Evaluation Example 2: Evaluation of Active Material**

The average particle diameters ($D_{50}$) and average pellet density (PD) of the positive electrode active materials of Comparative Example 1 and Examples 1-1, 1-2, 1-3, 1-4, 2-1, 2-2, 2-3, and 2-4 were measured, and the results are shown in Table 1.

Table 1

|  | $D_{50}$ (μm) | PD (g/cc) |
|---|---|---|
| Comparative Example 1 | 1.39 | 2.28 |
| Example 1-1 | 1.42 | 2.29 |
| Example 1-2 | 1.48 | 2.29 |
| Example 1-3 | 1.6 | 2.26 |
| Example 1-4 | 1.75 | 2.23 |
| Example 2-1 | 9.32 | 1.99 |
| Example 2-2 | 9.25 | 1.99 |
| Example 2-3 | 9.11 | 1.96 |
| Example 2-4 | 9.0 | 1.94 |

Referring to Table 1, it may be confirmed that the average particle diameters ($D_{50}$) of the positive electrode active materials according to Examples 2-1 to 2-4 of the present disclosure were markedly increased compared to those of the positive electrode active materials of Examples 1-1 to 1-4. In addition, it may be confirmed that the average pellet density of the positive electrode active materials of Examples 1-1 to 1-4 was also increased compared to the average pellet density of the positive electrode active materials of Examples 2-1 to 2-4.

**Evaluation Example 3: Evaluation of Battery Properties**

The properties of the rechargeable lithium batteries fabricated utilizing the positive electrode active materials of Examples 1-1, 1-2, 1-3, 1-4, 2-1, 2-2, 2-3, and 2-4, and Comparative Examples 1-1 and 1-2 were evaluated.

Rechargeable lithium batteries were divided into coin cells and powder forms and initially charged under constant current (about 0.1 C) and constant voltage (about 5 V) conditions, and after resting for about 10 minutes, discharged until about 3.0 V under constant current (about 0.1 C) conditions to carry out initial charging and discharging. Additionally, additional powders were produced, and positive electrode energy density was measured. The evaluation results on battery properties are shown in Table 2.

Table 2

| Example | Positive electrode | Mixing ratio | | Coin cell | | | | Powder | |
|---|---|---|---|---|---|---|---|---|---|
|  |  | LMFP (wt%) | LFO (wt%) | 4.5 V Charge amount (mAh/g ) | 4.5 V Discharge amount (mAh/g ) | 4.5 V Efficiency (%) | Average voltage (V) | Pellet density (g/cc) | Positive electrode energy density (Wh/L) |
| Comparative Example 1-1 | LMFP | 100% | 0% | 150.7 | 143.4 | 95.2 | 3.60 | 2.28 | 1177 |
| Comparative Example 1-2 | LFO | 0% | 100% | 730.3 | 0.5 | 0.1 | - | 1.80 | - |
| Example 1-1 | LMFP +LFO | 99.5% | 0.5% | 154.5 | 144.2 | 93.3 | 3.61 | 2.29 | 1192 |
| Example 1-2 | LMFP +LFO | 99% | 1% | 157.0 | 143.3 | 91.3 | 3.61 | 2.29 | 1185 |
| Example 1-3 | LMFP +LFO | 97.5% | 2.5% | 163.2 | 140.4 | 86.0 | 3.60 | 2.26 | 1142 |
| Example 1-4 | LMFP +LFO | 95% | 5.0% | 172.5 | 137.3 | 79.6 | 3.59 | 2.23 | 1099 |

(continued)

| Example | Positive electrode | Mixing ratio | | Coin cell | | | | Powder | |
|---|---|---|---|---|---|---|---|---|---|
| | | LMFP (wt%) | LFO (wt%) | 4.5 V Charge amount (mAh/g) | 4.5 V Discharge amount (mAh/g) | 4.5 V Efficiency (%) | Average voltage (V) | Pellet density (g/cc) | Positive electrode energy density (Wh/L) |
| Example 2-1 | LMFP +LFO | 99.5% | 0.5% | 152.5 | 146.5 | 96.1 | 3.64 | 1.99 | 1061 |
| Example 2-2 | LMFP +LFO | 99% | 1% | 154.1 | 144.9 | 94 | 3.63 | 1.99 | 1047 |
| Example 2-3 | LMFP +LFO | 97.5% | 2.5% | 159.7 | 142.0 | 88.9 | 3.61 | 1.96 | 1006 |
| Example 2-4 | LMFP +LFO | 95% | 5.0% | 169.1 | 138.8 | 82.1 | 3.6 | 1.94 | 968 |

Referring to Table 2, it was confirmed that the rechargeable batteries according to Examples 1-1 to 2-4 had excellent or suitable capacity and efficiency properties. For example, it was confirmed that the rechargeable battery according to Example 2-1 of the present disclosure had the highest efficiency and the rechargeable battery according to Example 1-1 of the present disclosure had the highest value of positive electrode energy density compared to the remaining Examples (i.e. Examples 1-2 to 1-4). Example 1-2 had the next highest efficiency, and through which, it may be confirmed that the optimal or suitable mixing ratio was a case of mixing the first particles and the second particles at a weight ratio of about 99.5:0.5 and 99:1.

A positive electrode active material according to the present disclosure may include olivine-based first particles with several hundred nanometers in size. The positive electrode active material according to the present disclosure may include second particles in a single crystal form with several micrometers in size, which serve as a sacrificial positive electrode. As a result, the mixture density, capacity, and energy density of the positive electrode active material of the present disclosure may be improved. A positive electrode active material layer according to the present disclosure may be smoothly attached to a positive electrode current collector even with a relatively small amount of a binder. A rechargeable lithium battery according to the present disclosure may have a relatively high average voltage.

As utilized herein, the terms "substantially," "about," and similar terms are utilized as terms of approximation and not as terms of degree, and are intended to account for the inherent deviations in measured or calculated values that would be recognized by those of ordinary skill in the art. "About" or "approximately," as utilized herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A battery manufacturing device, a management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although one or more embodiments of the present disclosure have been described, it is understood that the present disclosure should not be limited to these embodiments but one or more suitable changes and modifications may be made by one ordinary skilled in the art within the scope of the present disclosure as hereinafter claimed and equivalents thereof.

**Claims**

1. A positive electrode active material, comprising:

   first particles comprising a compound represented by Chemical Formula 1 and having a first average particle diameter; and
   second particles comprising a compound represented by Chemical Formula 2 and having a second average particle diameter that is greater than the first average particle diameter,
   wherein a mixing ratio of the first particles and the second particles is about 95:5 to about 99.5:0.5:

   Chemical Formula 1            $Li_{a1}Mn_{b1}Fe_{x1}B_{y1}PO_{4-c1}$,

   in Chemical Formula 1, $0.8 \leq a1 \leq 1.2$, $0.5 \leq b1 \leq 0.899$, $0.1 \leq x1 \leq 0.499$, $0.001 \leq y1 \leq 0.05$, $0 < c1 \leq 0.05$, $b1 + x1 + y1 = 1$, and B is at least one element selected from the group consisting of Mg, Ti, V and Al, and

   Chemical Formula 2            $Li_{a2}Fe_{b2}O_{c2}$,

   in Chemical Formula 2, $1 \leq a2 \leq 5$, $0.9 \leq b2 \leq 1.1$, and $2 \leq c2 \leq 4$.

2. The positive electrode active material of claim 1, wherein the mixing ratio is about 99:1 to about 99.5:0.5.

3. The positive electrode active material of claim 1 or claim 2, wherein each of the first particles and the second particles has a single particle form.

4. The positive electrode active material of claim 1 or claim 2,

   wherein the first particles have a secondary particle form in which a plurality of primary particle is aggregated or agglomerated to each other, and
   the second particles have a single particle form.

5. The positive electrode active material of any one of claims 1 to 4, wherein the first particles comprise a first coating layer containing carbon, and a content of carbon in the first particles is about 1.5 wt% to about 2.5 wt% based on about 100 wt% of a total weight of the first particles.

6. The positive electrode active material any one of claims 1 to 5, wherein the second particles comprise a second coating layer, and
   the second coating layer comprises a boron-containing compound, an aluminium-containing compound or a combination thereof.

7. The positive electrode active material of any one of claims 1 to 6, wherein the first average particle diameter is about 0.4 $\mu$m to about 10 $\mu$m.

8. The positive electrode active material of any one of claims 1 to 7, wherein the second average particle diameter is about 4 $\mu$m to about 10 $\mu$m.

9. The positive electrode active material of any one of claims 1 to 8, wherein a pellet density of the positive electrode active material is about 2.0 g/cc to about 2.5 g/cc.

10. A positive electrode comprising:

a positive electrode current collector; and
a positive electrode active material layer on the positive electrode current collector,
wherein the positive electrode active material layer comprises the positive electrode active material according to any one of claims 1 to 9, a conductive material, and a binder.

11. The positive electrode of claim 10, wherein a content of the binder is about 0.5 parts by weight to about 5 parts by weight based on about 100 parts by weight of the positive electrode active material layer.

12. The positive electrode of claim 10 or claim 11, wherein the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

13. The positive electrode of any one of claims 10 to 12, wherein the conductive material content is about 0.5 parts by weight to about 5 parts by weight base on about 100 parts by weight of the positive electrode active material layer.

14. The positive electrode of any one of claims 10 to 13, wherein the conductive material comprises: a carbon-based material comprising natural graphite, artificial graphite, carbon black, acetylene black, Ketjen black, carbon fiber, carbon nano-fiber, or carbon nano-tube; a metal-based material comprising copper, nickel, aluminium or silver and having a metal powder or metal fiber form; a conductive polymer comprising a polyphenylene derivative; or a mixture thereof.

15. A rechargeable lithium battery, comprising:

the positive electrode according to any one of claims 10 to 14;
a negative electrode comprising a negative electrode current collector and a negative electrode active material layer on the negative electrode current collector; and
a separator between the positive electrode and the negative electrode.

# FIG. 1

ELL

Li$^+$

COL1 AML1    30    COL2 AML2

10          20

# FIG. 2

# FIG. 3

EP 4 641 672 A1

# FIG. 4

# FIG. 5

# FIG. 6A

FIG. 6B

# FIG. 7A

S4800 5.0kV 8.0mm x20.0k SE(M)    2.00um

# FIG. 7B

S4800 5.0kV 8.1mm x20.0k SE(M)    2.00um

Europäisches
Patentamt

European
Patent Office

Office européen
des brevets

# EUROPEAN SEARCH REPORT

**Application Number**

EP 25 16 7768

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 345 950 A1 (BYD CO LTD [CN]) 3 April 2024 (2024-04-03) * paragraph [0028]; claims 1-19; figures 1-4 * | 1-15 | INV. H01M4/36 H01M4/131 H01M4/505 H01M4/525 H01M4/58 |
| A | US 2023/016319 A1 (TAKEGUCHI NAOKI [JP]) 19 January 2023 (2023-01-19) * paragraph [0056]; claims 1-12; example 1 * | 1-15 | ADD. H01M10/0525 H01M4/02 |
| A | US 2019/372093 A1 (ZHAMU ARUNA [US] ET AL) 5 December 2019 (2019-12-05) * paragraph [0122]; claims 1-26 * | 1-15 | |
| A | CN 113 228 346 A (A123 SYSTEMS LLC) 6 August 2021 (2021-08-06) * claims 1-23 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 23 September 2025 | Szekely, Noemi Kinga |

EPO FORM 1503 03.82 (P04C01)

## ANNEX TO THE EUROPEAN SEARCH REPORT
## ON EUROPEAN PATENT APPLICATION NO.

EP 25 16 7768

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2025

| Patent document cited in search report | | Publication date | Patent family member(s) | | Publication date |
|---|---|---|---|---|---|
| EP 4345950 | A1 | 03-04-2024 | AU | 2022350974 A1 | 25-01-2024 |
| | | | CA | 3224474 A1 | 30-03-2023 |
| | | | CN | 115863620 A | 28-03-2023 |
| | | | EP | 4345950 A1 | 03-04-2024 |
| | | | JP | 2024531047 A | 29-08-2024 |
| | | | KR | 20240017066 A | 06-02-2024 |
| | | | US | 2024145715 A1 | 02-05-2024 |
| | | | WO | 2023046066 A1 | 30-03-2023 |
| US 2023016319 | A1 | 19-01-2023 | JP | 7686477 B2 | 02-06-2025 |
| | | | JP | 2023010319 A | 20-01-2023 |
| | | | US | 2023016319 A1 | 19-01-2023 |
| US 2019372093 | A1 | 05-12-2019 | NONE | | |
| CN 113228346 | A | 06-08-2021 | CN | 113228346 A | 06-08-2021 |
| | | | KR | 20210095221 A | 30-07-2021 |
| | | | US | 2022020977 A1 | 20-01-2022 |
| | | | US | 2024429365 A1 | 26-12-2024 |
| | | | WO | 2020132622 A1 | 25-06-2020 |

EPO FORM P0459

For more details about this annex : see Official Journal of the European Patent Office, No. 12/82